# EUROPÄISCHE PATENTANMELDUNG

(11) **EP 4 498 440 A1**
(43) Veröffentlichungstag der Anmeldung: **29.01.2025**
(21) Anmeldenummer: 23188277.0
(22) Anmeldetag: 28.07.2023
(51) Int. Cl.: H01M 4/04, H01M 4/139, H01M 4/66, H01M 10/0525, H01M 4/1393, H01M 10/052

(54) **VERFAHREN ZUM HERSTELLEN EINES BESCHICHTETEN OBJEKTS, BESCHICHTETES OBJEKT, TROCKNUNGS-VORRICHTUNG ZUM DURCHFÜHREN DES VERFAHRENS UND COMPUTERPROGRAMM-PRODUKT MIT DIGITALEM ZWILLING ZUR SIMULATION DES VERFAHRENS, DES BESCHICHTETEN OBJEKTS ODER DER TROCKNUNGS-VORRICHTUNG**

(71) Anmelder: Siemens Aktiengesellschaft, 80333 München (DE)
(72) Erfinder: Schulte, Sascha, 91315 Höchstadt (DE); Albrecht, Andreas, 89081 Ulm (DE)
(74) Vertreter: Siemens Patent Attorneys

(57) **Zusammenfassung**

Die Erfindung betrifft ein Verfahren zum Herstellen eines beschichteten Objekts mit einem auf einer Objekt-Oberfläche des Objekts angeordneten Schicht-Aufbau mit einer Schicht und mindestens einer auf der Schicht angeordneten weiteren Schicht mit folgenden Verfahrens-Schritten angegeben: Aufbringen einer lösungsmittelhaltigen Feucht-Schicht der Schicht auf der Objekt-Oberfläche des Objekts, Aufbringen einer weiteren lösungsmittelhaltigen Feucht-Schicht der weiteren Schicht auf der Feucht-Schicht und Entfernen von Lösungsmittel der Feucht-Schicht und Entfernen von Lösungsmittel der weiteren Feucht-Schicht, wobei zum Entfernen des Lösungsmittels der Feucht-Schicht und/oder zum Entfernen des Lösungsmittels der weiteren Feucht-Schicht elektromagnetische Strahlung verwendet wird. Die Erfindung wird im Rahmen der Herstellung von Batterie-Zellen eingesetzt.

## Beschreibung

Die Erfindung betrifft ein Verfahren zum Herstellen eines beschichteten Objekts, ein damit hergestelltes beschichtetes Objekt und eine Trocknungs-Vorrichtung zum Durchführen des Verfahrens. Daneben wird ein Computer-Programm-Produkt mit einem digitalen Zwilling zur Simulation des Verfahrens, des beschichteten Objekts angegeben.

Bei der Produktion von Batterie-Zellen (und vergleichbar aufgebauten Flächen-Elementen) werden Elektroden zunächst auf langen Bahnen metallischer Folien angeordnet: Auf eine Objekt-Oberfläche (Folien-Oberfläche) eines Objekts (Metall-Folie) wird eine lösungsmittelhaltige Feucht-Schicht aufgetragen. Das Beschichten der Metall-Folie erfolgt in den meisten Fällen durch das Auftragen einer nassen Paste auf die Metall-Folie. Die nasse Paste weist beispielsweise Graphit, Bindemitteln, Lösungsmitteln und ggf. weitere Bestandteile auf. Nach dem Auftragen der nassen Paste auf die Folien-Oberfläche wird die so erhaltene lösungsmittelhaltige Feucht-Schicht getrocknet. Danach kommt es zur Verarbeitung zu den einzelnen Batterie-Zellen.

Gerade für die Herstellung von Batterie-Zellen ist es wichtig, dass mit der Trocknung der Feucht-Schicht ein bestimmter Trocknungs-Grad erreicht wird. Für die angesprochenen langen Bahnen wird dafür eine Trocknungs-Vorrichtung (z.B. Ofen) mit langer trocknungs-Strecke benötigt. Erschwerend kommt hinzu, dass auch in dem Fall, dass ein Schicht-Aufbau mit mehrere übereinander angeordneten lösungsmittelhaltigen Feucht-Schichten zum Einsatz kommt, der Trocknungs-Grad im gesamten Schicht-Aufbau erreicht werden soll. Ein bestimmter Grad an Rest-Feuchte darf nicht überschritten werden.

Aufgabe der vorliegenden Erfindung ist es, aufzuzeigen, wie ein Objekt, auf dem lösungsmittelhaltige Schichten übereinander angeordnet werden, effizient und sicher getrocknet werden kann.

Zur Lösung der Aufgabe wird ein Verfahren zum Herstellen eines beschichteten Objekts mit einem auf einer Objekt-Oberfläche des Objekts angeordneten Schicht-Aufbau mit einer Schicht und mindestens einer auf der Schicht angeordneten weiteren Schicht mit folgenden Verfahrens-Schritten angegeben:
- Aufbringen einer lösungsmittelhaltigen Feucht-Schicht der Schicht auf der Objekt-Oberfläche des Objekts,
- Aufbringen einer weiteren lösungsmittelhaltigen Feucht-Schicht der weiteren Schicht auf der Feucht-Schicht und
- Entfernen von Lösungsmittel der Feucht-Schicht und Entfernen von Lösungsmittel der weiteren Feucht-Schicht,
wobei zum Entfernen des Lösungsmittels der Feucht-Schicht und/oder zum Entfernen des Lösungsmittels der weiteren Feucht-Schicht elektromagnetische Strahlung verwendet wird.

Zur Lösung der Aufgabe wird auch ein derart hergestelltes beschichtetes Objekt mit einem Schichtaufbau auf einer Objekt-Oberfläche des Objekts angegeben. Der Schicht-Aufbau weist
- eine auf der Objekt-Oberfläche des Objekts angeordnete Schicht und
- mindestens eine auf der Schicht angeordneten weitere Schicht auf.

Darüber hinaus wird zur Lösung der Aufgabe eine Trocknungs-Vorrichtung zum Durchführen des Verfahrens angegeben. Die Trocknungs-Vorrichtung ist mit mindestens einer Quelle für elektromagnetische Strahlung ausgestattet.

Gemäß einem weiteren Aspekt der Erfindung wird ein Computer-Programm-Produkt mit einem digitalen Zwilling zur Simulation des Verfahrens, des beschichteten Objekts und/oder der Trocknungs-Vorrichtung angegeben.

Das Objekt dient als Träger (oder Substrat) des Schicht-Aufbaus. Die Objekt-Oberfläche ist eine Träger-Oberfläche (oder Substrat-Oberfläche).

Durch das Entfernen des Lösungsmittels bzw. der Lösungsmittel-Gemische werden die Feucht-Schichten zumindest teilweise oder komplett getrocknet und damit in die Schicht bzw. in die weitere des Schicht-Aufbaus umgewandelt. Mit Hilfe der elektromagnetischen Strahlung wird dazu Wärme punktgenau eingetragen. Damit ist es möglich, die Schichten gezielt zu trocknen. Es wird ein gewünschter, eventuell ortsabhängiger Trocknungs-Grad an der Oberfläche und im Volumen der Schicht bzw. der weiteren Schicht erreicht.

Dabei können lediglich zwei Schichten den Schicht-Aufbau bilden. Der Schicht-Aufbau kann aber auch eine Vielzahl von Schichten aufweisen.

Bei dem Schicht-Aufbau sind die Schicht und die weitere Schicht vorzugsweise übereinander angeordnet. Die weitere Schicht ist auf einer Schicht-Oberfläche der Schicht angeordnet, die der Objekt-Oberfläche des Objekts abgekehrt ist.

Gemäß einer besonderen Ausgestaltung des Verfahrens, wird das Entfernen des Lösungsmittels der Feucht-Schicht vor dem Aufbringen der lösungsmittelhaltigen weiteren Feucht-Schicht durchgeführt. Die Feucht-Schicht wird vor dem Auftragen der weiteren Feucht-Schicht (vor-)getrocknet. Durch das Trocknen der Feucht-Schicht bildet sich eine feste oder teilflexible Schicht. Dabei entsteht eine getrocknete Schicht-Oberfläche, die der Objekt-Oberfläche abgekehrt ist. Auf diese getrocknete Schicht-Oberfläche wird die weitere lösungsmittelhaltige Feucht-Schicht aufgetragen und anschließend getrocknet.

Insbesondere wird als elektromagnetische Strahlung Infrarot-Strahlung verwendet. Eine Umwandlung einer kurwelligeren (höher-energetischen) elektromagnetischen Strahlung in eine länger-wellige (nieder-energetische) elektromagnetische Strahlung (Infrarot-Strahlung) ist damit nicht notwendig. Die elektromagnetische Strahlung kann direkt zum Trocknen verwendet werden.

Gemäß einer besonderen Ausgestaltung wird als elektromagnetische Strahlung Laser-Strahlung verwendet. Als Quelle für die elektromagnetische Strahlung werden ein oder mehrere Laser verwendet. Die Trocknungs-Vorrichtung ist also eine Laser-Trocknungs-Einheit. Dazu kann ein Puls-Laser mit gepulster elektromagnetischer Strahlung oder ein Dauerstrich-Laser mit nicht gepulster elektromagnetischer Strahlung verwendet. Gerade mit der Laser-Strahlung kann der Wärme-Eintrag in die lösungsmittelhaltigen Feucht-Schichten zeitlich und örtlich genau festgelegt werden. So ist beispielsweise eine Trocknung der Feucht-Schicht oder der weiteren Feucht-Schicht mit einem zweidimensionalen Raster möglich.

Die lösungsmittelhaltigen Feucht-Schichten können unterschiedliche Lösungsmittel oder Lösungsmittel-Gemische aufweisen. Besonders vorteilhaft ist es, wenn die Feucht-Schichten gleiche Lösungsmittel oder gleiche Lösungsmittel-Gemische aufweisen. Dies vereinfacht eine Prozess-Führung des Trocknens der Feucht-Schichten. In einer besonderen Ausgestaltung weist daher die lösungsmittelhaltige Feucht-Schicht mindestens ein Lösungsmittel auf, das einem Lösungsmittel der weiteren Feucht-Schicht entspricht.

Die Feucht-Schichten und damit die resultierenden Schichten können gleiche oder annähernd gleiche Binder bzw. Binder-Gehalte aufweisen. Vorteilhaft ist es aber, wenn eine Feucht-Schicht und eine weitere Feucht-Schicht mit unterschiedlichen Bindern und/oder unterschiedlichen Binder-Gehalten verwendet werden. Die resultierenden Schichten weisen unterschiedliche Binder und/oder unterschiedliche Binder-Gehalte auf. Damit kann eine weiter unten beschriebene Binder-Migration im Schicht-Aufbau gesteuert werden.

Der wesentliche Aspekt der Erfindung ist die gezielte Trocknung der Feucht-Schichten für den resultierenden SchichtAufbau. Um dies zu unterstützen, ist es vorteilhaft, nicht zu dicke Feucht-Schichten zu verwenden. Gemäß einer besonderen Ausgestaltung werden eine Feucht-Schicht und/oder eine weitere Feucht-Schicht mit einer Schicht-Dicke aus dem Bereich von 50 pm bis 1000 pm und insbesondere aus dem Bereich von 100 pm bis 500 pm ausgewählten Schicht-Dicke aufgebracht. Dabei können die Feucht-Schichten gleiche oder annähernd gleiche Schicht-Dicken aufweise (z.B. Abweichung von bis zu 10%). Es können aber auch Feucht-Schichten mit unterschiedlichen Schicht-Dicken eingesetzt werden.

Das Objekt kann ein beliebiges Objekt sein. In einer besonderen Ausgestaltung weisen das Objekt eine Folie und die Objekt-Oberfläche eine Folien-Oberfläche auf. Die Erfindung wird insbesondere zur Herstellung von Batterien bzw. Batterie-Zellen verwendet. In einer besonderen Ausgestaltung weist die Folie eine Metall-Folie auf. Mit der Erfindung werden insbesondere Elektroden einer Batterie auf der Metall-Folie erzeugt. In einer besonderen Ausgestaltung weisen daher die Schicht und/oder die weitere Schicht mindestens ein Elektroden-Material auf. Es werden also Feucht-Schichten mit dem Elektroden-Material als Schicht-Material aufgetragen. Insbesondere ist dabei die Metall-Folie Bestandteil eines (metallischen) Strom-Sammlers einer Batterie.

Folgende besonderen Aspekte der Erfindung sind zu erwähnen:
- In der Beschichtung (Schicht-Aufbau mit den Schichten) sind neben den eigentlichen Aktiv-Materialien (ElektrodenMaterialien) und Lösungsmittel auch Binder ("Klebstoff") enthalten, die eine Haftung der später trockenen Beschichtung auf dem Objekt, beispielsweise Metall-Folie eines metallischen Strom-Sammler sicherstellen sollen. Da der Binder vor allem adhäsives Versagen zwischen dem Schicht-Aufbau und Metall-Folie verhindern soll, wird dieser vor allem an der Verbindungs-Stelle zwischen Metall-Folie und Schicht-Aufbau benötigt. In Schichten des Schicht-Aufbaus, die weiter entfernt sind von der Metall-Folie, wird zwar ein gewisser Anteil an Binder benötigt, um ein kohäsives Versagen zwischen den Partikeln des Aktiv-Materials zu verhindern, jedoch ist dieser deutlich geringer im Vergleich zum benötigten Binder-Anteil am der Metall-Folie. Auch in Bezug auf die ionische Leitfähigkeit und die zugängliche Reaktions-Oberfläche des Aktiv-Materials wirkt sich ein reduzierter Binder-Anteil in Schichten vorteilhaft aus, die von der Metall-Folie weiter entfernt sind (in einer Batterie-Zelle entspricht dies Schichten nahe am Separator).
- Aus der Forschung sind Mehrschicht-Beschichter bekannt, die zwei oder mehr Schichten mit unterschiedlichem Binder-Gehalt auf eine Folie aufbringen. Die unterste Schicht hat dabei den höchsten Anteil an Bindern. Bei diesem Verfahren werden entweder die Schichten jeweils einzeln direkt nacheinander aufgebracht und getrocknet, oder alle Schichten werden im nassen Zustand in der Beschichtungs-Düse übereinander aufgebracht und anschließend gemeinsam getrocknet.

Beide Lösungen haben den Nachteil, dass bei klassischen Trocknungsmethoden eine sehr lange Trocknungsstrecke / Ofenanlage benötigt wird, bis die Beschichtung durch die gesamte Dicke durchgetrocknet wurde. Besonders störend ist in diesem Zusammenhang das bekannte Phänomen der Binder-Migration zu sehen. Dabei wird der Binder aus tiefen Schichten bei der Trocknung mit dem verdampfenden Lösungsmittel von tiefen Schichten zur Oberfläche transportiert. Der sich so einstellende Gradient der Binderkonzentration ist genau entgegengesetzt zum gewünschten Gradienten. Statt eine hohe Konzentration nahe am Übergang zum Stromsammler zu zeigen, konzentrieren sich die Binder an der Oberfläche. Dies würde die Haftkraft schwächen. Mit der Erfindung wird dies vermieden.

Zusammenfassend sind mit der Erfindung folgende Vorteile verbunden:
- Die Erfindung ist insbesondere für solche Fälle geeignet, bei denen es um eine möglichst genaue Kontrolle des EnergieEintrags und damit des Lösungsmittel-Gehalts einer aufgetragenen Feucht-Schicht geht, insbesondere für den Fall der Herstellung von Batterie-Zellen.
- Mit der Erfindung ist ein punktgenaues und damit effizientes Trocknen der aufgebrachten Feucht-Schichten möglich.
- Das Problem der Binder-Migration wird umgangen: An der Verbindung zwischen Schicht und Objekt-Oberfläche verbleibt möglichst viel Binder.
- Durch die Verwendung der elektromagnetischen Strahlung, insbesondere durch die Verwendung von Laser-Strahlung wird eine Trocknungs-Dauer und damit eine Größe einer entsprechenden Trocknungs-Anlage sowie eine Verlust-Energie gegenüber klassischen Trocknungs-Öfen deutlich reduziert.
- Vorteilhaft werden die Feucht-Schicht und die auf der Feucht-Schicht aufgebrachte weitere Feucht-Schicht nacheinander getrocknet. Dies hat den Vorteil, dass die anfangs noch frei liegenden Feucht-Schicht einfach erreicht und getrocknet werden kann, während sie später, wenn darüber weitere Feucht-Schichten aufgebracht wurden, die Wärme nur noch schlecht eingebracht werden kann. So kann das Trocknungs-Verfahren signifikant beschleunigt werden, da die Wärme-Energie immer direkt an die richtige Position gebracht wird und nicht erst durch die (bereits getrockneten) darüber liegenden Schichten hindurch zur nassen Feucht-Schicht transportiert werden muss.

Anhand eines Ausführungsbeispiels und der dazugehörigen Figuren wird die Erfindung näher beschrieben. Die Figuren sind schematisch und stellen keine maßstabsgetreue Abbildung dar.
Figur 1 zeigt im Querschnitt einen Ausschnitt eines beschichteten Objekts.
Figuren 2 und 3 zeigt ein Verfahren zum Herstellen des beschichteten Objekts.

Bei dem Ausführungsbeispiel geht es um ein Verfahren zum Herstellen eines beschichteten Objekts 12 mit einem auf einer Objekt-Oberfläche 11 eines Objekts 1 angeordneten Schicht-Aufbau 2 mit einer Schicht 21 und einer auf der Schicht 21 angeordneten weiteren Schicht 22. Das beschichtete Objekt ist eine Metall-Folie 10, auf deren Folien-Oberfläche 101 Elektroden-Material 240 angeordnet wird. Die beschichtete Metall-Folie ist Bestandteil eines Strom-Sammlers 100 einer Batterie 1000.

Für das Herstellen werden folgende Verfahrens-Schritte durchgeführt:
- Aufbringen einer lösungsmittelhaltigen Feucht-Schicht 210 der Schicht 21 auf der Objekt-Oberfläche 11 des Objekts 1,
- Aufbringen einer weiteren lösungsmittelhaltigen Feucht-Schicht 220 der weiteren Schicht 22 auf der Feucht-Schicht 210 und
- Entfernen von Lösungsmittel der Feucht-Schicht 210 und Entfernen von Lösungsmittel der weiteren Feucht-Schicht 220,

Zum Entfernen des Lösungsmittels der Feucht-Schicht 210 und zum Entfernen des Lösungsmittels der weiteren Feucht-Schicht 220 wird elektromagnetische Strahlung 3 verwendet. Die elektromagnetische Strahlung ist Infrarot-Strahlung 310 eines Lasers 30.

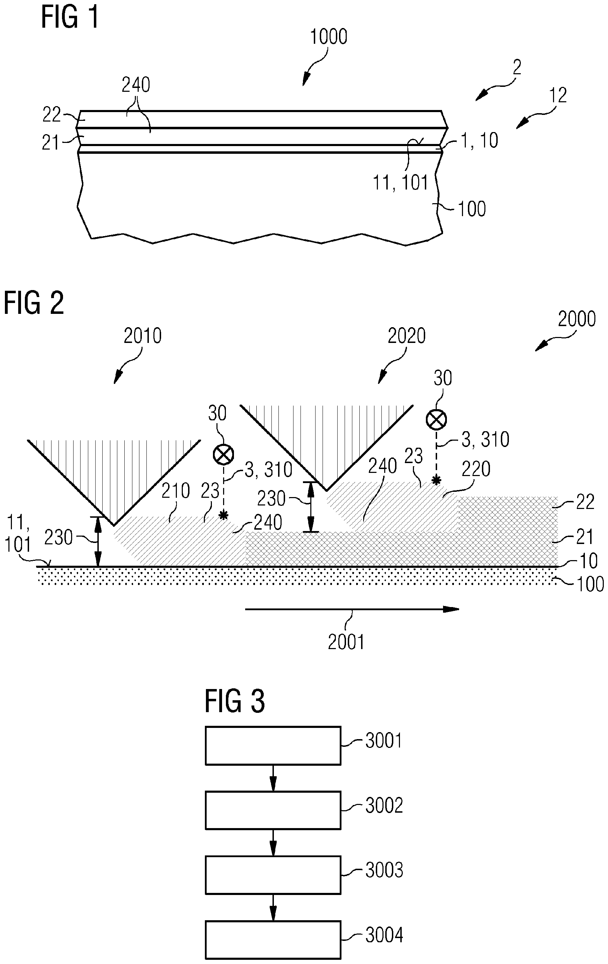

Gemäß dem Ausführungsbeispiel wird das Entfernen des Lösungsmittels der Feucht-Schicht 210 vor dem Aufbringen der lösungs-mittelhaltigen weiteren Feucht-Schicht 220 durchgeführt. Es werden folgende Verfahrensschritte nacheinander durchgeführt: Aufbringen der Feucht-Schicht 3001, Trocknen (bzw. Entfernen von Lösungsmittel) der Feucht-Schicht 3002, Aufbringen der weiteren Feucht-Schicht 3003 und Trocknen der weiteren Feucht-Schicht 3004 (vgl. Figur 3).

In Figur 2 wird skizziert, wie zwei Beschichtungsanlagen 2010 und 2020 mit Trocknungs-Vorrichtung 2000 nacheinander Material auf eine Metall-Folie 10 eines metallischen Strom-Sammlers 100 aufbringen (Richtung der Herstellung: 2001. Direkt nach dem Beschichten der Metall-Folie 10 wird die noch freiliegende Feucht-Schicht 210 getrocknet, bevor die weitere Feucht-Schicht 220 über die nun trockene (und leicht geschrumpfte) Schicht 21 aufgebracht wird.

Die beiden Feucht-Schichten 210 und 220 weisen Wasser als Lösungsmittel 23 auf. Der Binder-Gehalt der resultierenden Schicht 21 ist höher als der Binder-Gehalt der weiteren Schicht 22.

Zum Trocknen der Feucht-Schichten 210 und 220 wird elektromagnetischen Strahlung 3 in Form von Infrarot-Strahlung 310 von Lasern 30 eingesetzt.

Zur Auslegung der Trocknungs-Vorrichtung 2000 wird ein digitaler Zwilling zur Simulation des Verfahrens 5000, des beschichteten Objekts 12 und der Trocknungs-Vorrichtung 2000 verwendet.

## Patentansprüche

1. Verfahren zum Herstellen eines beschichteten Objekts (12) mit einem auf einer Objekt-Oberfläche (11) eines Objekts (1) angeordneten Schicht-Aufbau (2) mit einer Schicht (21) und mindestens einer auf der Schicht (21) angeordneten weiteren Schicht (22) mit folgenden Verfahrens-Schritten:
- Aufbringen einer lösungsmittelhaltigen Feucht-Schicht (210) der Schicht (21) auf der Objekt-Oberfläche (11) des Objekts (1),
- Aufbringen einer weiteren lösungsmittelhaltigen Feucht-Schicht (220) der weiteren Schicht (22) auf der Feucht-Schicht (210) und
- Entfernen von Lösungsmittel der Feucht-Schicht (210) und Entfernen von Lösungsmittel der weiteren Feucht-Schicht (220),
wobei zum Entfernen des Lösungsmittels der Feucht-Schicht (210) und/oder zum Entfernen des Lösungsmittels der weiteren Feucht-Schicht (220) elektromagnetische Strahlung (3) verwendet wird.

2. Verfahren nach Anspruch 1, wobei das Entfernen des Lösungsmittels der Feucht-Schicht (210) vor dem Aufbringen der lösungs-mittelhaltigen weiteren Feucht-Schicht (220) durchgeführt wird.

3. Verfahren nach Anspruch 1 oder 2, wobei als elektromagnetische Strahlung (3) Infrarot-Strahlung verwendet wird.

4. Verfahren nach einem der Ansprüche 1 bis 3, wobei als elektromagnetische Strahlung (3) Laser-Strahlung (310) verwendet wird.

5. Verfahren nach einem der Ansprüche 1 bis 4, wobei die lösungsmittelhaltige Feucht-Schicht (210) mindestens ein Lösungsmittel aufweist, das einem Lösungsmittel der weiteren Feucht-Schicht (220) entspricht.

6. Verfahren nach einem der Ansprüche 1 bis 5, wobei eine Feucht-Schicht (210) und eine weitere Feucht-Schicht (220) mit unterschiedlichen Bindern und/oder Binder-Gehalten verwendet werden.

7. Verfahren nach einem der Ansprüche 1 bis 6, wobei eine Feucht-Schicht (210) und/oder eine weitere Feucht-Schicht (220) mit einer Schicht-Dicke (230) aus dem Bereich von 50 pm bis 1000 pm und insbesondere aus dem Bereich von 100 pm bis 500 pm ausgewählten Schicht-Dicke aufgebracht werden.

8. Beschichtetes Objekt (12) mit einem Schichtaufbau (2) auf einer Objekt-Oberfläche (11) eines Objekts (1) mit
- einer auf der Objekt-Oberfläche (11) des Objekts (1) angeordneten Schicht (21) und
- mindestens einer auf der Schicht (21) angeordneten weiteren Schicht (22), wobei
- das beschichtete Objekt (21) nach einem der Ansprüche 1 bis 7 hergestellt wurde.

9. Beschichtetes Objekt nach Anspruch 8, wobei das Objekt (1) eine Folie (10) und die Objekt-Oberfläche (11) eine Folien-Oberfläche (101) aufweisen.

10. Beschichtetes Objekt nach Anspruch 9, wobei die Folie (10) eine Metall-Folie aufweist.

11. Beschichtetes Objekt nach einem der Ansprüche 8 bis 10, wobei die Schicht (21) und/oder die weitere Schicht (22) mindestens ein Elektroden-Material (240) aufweisen.

12. Beschichtetes Objekt nach Anspruch 10 oder 11, wobei die Metall-Folie Bestandteil eines Strom-Sammlers (100) einer Batterie (1000) ist.

13. Trocknungs-Vorrichtung (2000) zum Durchführen eines Verfahrens nach einem der Ansprüche 1 bis 8 mit mindestens einer Quelle (30) für elektromagnetische Strahlung (3).

14. Computer-Programm-Produkt mit einem digitalen Zwilling zur Simulation des Verfahrens (5000) nach einem der Ansprüche 1 bis 7, des beschichteten Objekts (12) nach einem der Ansprüche 8 bis 12 und/oder der Trocknungs-Vorrichtung (2000) nach Anspruch 13.
